# EUROPEAN PATENT APPLICATION

(11) **EP 2 584 429 A1**
(43) Date of publication of application: **24.04.2013**
(21) Application number: 12006559.4
(22) Date of filing: 18.09.2012
(51) Int. Cl.: G06F 3/01, G06F 3/0488

(54) **System and method for operating a user interface on an electronic device**

(30) Priority: 21.10.2011 US 201113278399
(71) Applicant: Sony Mobile Communications AB, 221 88 Lund (SE)
(72) Inventor: Eriksson, Joakim, 221 29 Lund (SE); Ormin, Mats, 212 32 Malmö (SE)
(74) Representative: Banzer, Hans-Jörg

(57) **Abstract**

An electronic device (10) includes a sensor (18) for determining the position of an input member, such as a user's finger or stylus, for example, relative to a user interface of the device (10). Before the input member contacts the user interface (10), the sensor (18) detects the horizontal and vertical positions of the input member and generates positional signals indicative of those positions. A controller (12) at the device (10) determines the horizontal and vertical positions of the input member based on the positional signals, and generates first and second feedback signals as a function of the detected horizontal and vertical positions to indicate the input member position relative to the user interface.

## Description

### FIELD OF THE INVENTION

The present invention relates generally to electronic devices, and more particularly, to user interfaces for electronic devices.

### BACKGROUND

Electronic devices, such as cellular telephones, tablet computing devices, laptop computing devices, MP3 players, for example, include a user interface (UI). In general, the UI is a man-machine interface that includes both hardware and software that permits a user to interact with and control the device. For example, with the UI, a user can input information to perform functions such as navigate menu systems, send and receive email or text messages, place and receive telephone calls, and launch and execute application programs. The UI also outputs information to inform the user of certain events. However, regardless of the input/output information, manufacturers of such devices almost always endeavor to create user interfaces that are easy and efficient to use.

There are constraints and limitations, however, which must be considered when designing the UI. For example, the keypads for cellular telephones must be kept very small to accommodate the hand-held size of the overall device. However, the small keypad size sometimes hinders the ability of a user to locate and press a desired key. This problem is especially noticeable in devices that utilize a touch-sensitive display for the UI. Consider a Smartphone, for example. When using a Smartphone, the keys on the keypad are displayed as touch-sensitive controls. Users can determine when they hit a key because the selected key visually increases in size.

However, when compared to the standalone keyboards of desktop devices, it can be difficult to hit a correct key without looking directly at the keypad. Additionally, with conventional devices, it is virtually impossible for the user to determine which key he/she will hit until after the user's finger makes contact with the desired key. Thus, entering information via a keypad or other control in a UI is still unnecessarily cumbersome.

### SUMMARY

The present invention provides a method as defined in claim 1 and an electronic device as defined in claim 8. The dependent claims define preferred embodiments of the present invention. The present invention addresses these issues by providing an electronic device, such as a consumer electronic device, for example, that indicates the horizontal and vertical position of a stylus or a user's finger relative to a User Interface (UI) prior to the user actually contacting a desired UI control. More specifically, the device generates audible and/or tactile feedback signals for the user to indicate the position of the user's finger or stylus relative to the UI so that the user will be able to better determine which control he/she will actuate before contact with the control occurs.

In one or more embodiments, the present invention provides a method for operating a user interface on an electronic device. In one embodiment, the method comprises detecting a horizontal and vertical position of an input member relative to a User Interface (UI) prior to the input member contacting a user control on the UI, indicating the horizontal position of the input member relative to the UI by generating a first feedback signal based on the detected horizontal position of the input member, and indicating the vertical position of the input member relative to the UI by generating a second feedback signal based on the detected vertical position of the input member.

In one embodiment, at least one of the first and second feedback signals comprises audible feedback.

In one embodiment, at least one of the first and second feedback signals comprises tactile feedback.

In one embodiment, the method further comprises generating the at least one first and second feedback signal as one or more bursts of tactile feedback based on the detected horizontal or vertical position of the input member.

In one embodiment, indicating the horizontal and vertical positions of the input member relative to the UI comprises varying properties of the first and second feedback signals as a function of the detected horizontal and vertical positions, respectively.

In one embodiment, varying properties of the first and second feedback signals comprises varying a frequency of one of the first and second feedback signals and the intensity of the other of the first and second feedback signals.

In one embodiment, varying properties of the first and second feedback signals comprises varying a frequency of at least one of the first and second feedback signals.

In one embodiment, varying properties of the first and second feedback signals comprises varying an intensity of at least one of the first and second feedback signals.

In one embodiment, the input member comprises one of the user's finger and a stylus.

In addition, the present invention also provides an electronic device. In one embodiment, the device comprises a User Interface (UI), a sensor configured to generate positional signals upon detecting an input member proximate the UI prior to the input member contacting a user control on the UI, and a programmable controller configured to calculate a horizontal and vertical position of the input member relative to the UI based on the positional signals, indicate the horizontal position of the input member relative to the UI by generating a first feedback signal based on the detected horizontal position of the input member, and indicate the vertical position of the input member relative to the UI by generating a second feedback signal based on the detected vertical position of the input member.

In one embodiment, the device further comprises a loudspeaker. In such embodiments, at least one of the first and second feedback signals comprises an audible sound rendered through the loudspeaker.

In one embodiment, the device further comprises a tactile feedback generator. In such embodiments, at least one of the first and second feedback signals comprises tactile feedback generated by the tactile feedback generator.

In one embodiment, the controller is further configured to control the tactile feedback generator to generate one or more bursts of tactile feedback based on the detected horizontal or vertical position of the input member.

In one embodiment, the programmable controller is configured to indicate the horizontal and vertical positions of the input member relative to the UI by varying properties of the first and second feedback signals as a function of the detected horizontal and vertical positions, respectively.

In one embodiment, the programmable controller is configured to vary the properties of the first and second feedback signals by varying a frequency of one of the first and second feedback signals, and varying the intensity of the other of the first and second feedback signals.

In one embodiment, the programmable controller is configured to vary the frequency of at least one of the first and second feedback signals.

In one embodiment, the programmable controller is configured to vary the intensity of at least one of the first and second feedback signals.

Of course, those skilled in the art will appreciate that the present invention is not limited to the above contexts or examples, and will recognize additional features and advantages upon reading the following detailed description and upon viewing the accompanying drawings.

### BRIEF DESCRIPTION OF THE DRAWINGS

Figure 1 is a block diagram illustrating some of the components of a wireless communications device configured according to one embodiment of the present invention.

Figure 2 is a perspective view of a wireless communications device configured according to one embodiment of the present invention.

Figure 3 illustrates a User Interface (UI) for a text messaging application, and the effect of varying of one or more feedback parameters based on the horizontal and vertical positions of a user's finger proximate the UI according to one embodiment of the present invention.

Figure 4 illustrates a User Interface (UI) for a text messaging application, and the effect of varying of one or more feedback parameters based on the horizontal and vertical positions of a user's finger proximate the UI according to another embodiment of the present invention.

Figure 5 is a flow diagram illustrating a method of using first and second feedback signals to indicate the horizontal and vertical positions of a user's finger relative to the UI according to one embodiment of the present invention.

Figure 6 is a perspective view of another type of wireless communications device configured to function according to one embodiment of the present invention.

### DETAILED DESCRIPTION

The present invention utilizes audible and/or tactile feedback to indicate the position of a user's finger relative to one or more controls on a User Interface (UI) of an electronic device before the user's finger contacts the UI. More particularly, the invention detects and monitors the horizontal and vertical position of the user's finger relative to the UI. Based on these positions, the invention generates audible and/or tactile feedback signals to indicate where on the surface of the UI the user's finger would hit if the user's finger were to make contact with the surface of the UI. By providing these indications, the invention helps the users of wireless communications devices having relatively small Uls, for example, to better know which key or control they will hit on the UI before that contact occurs.

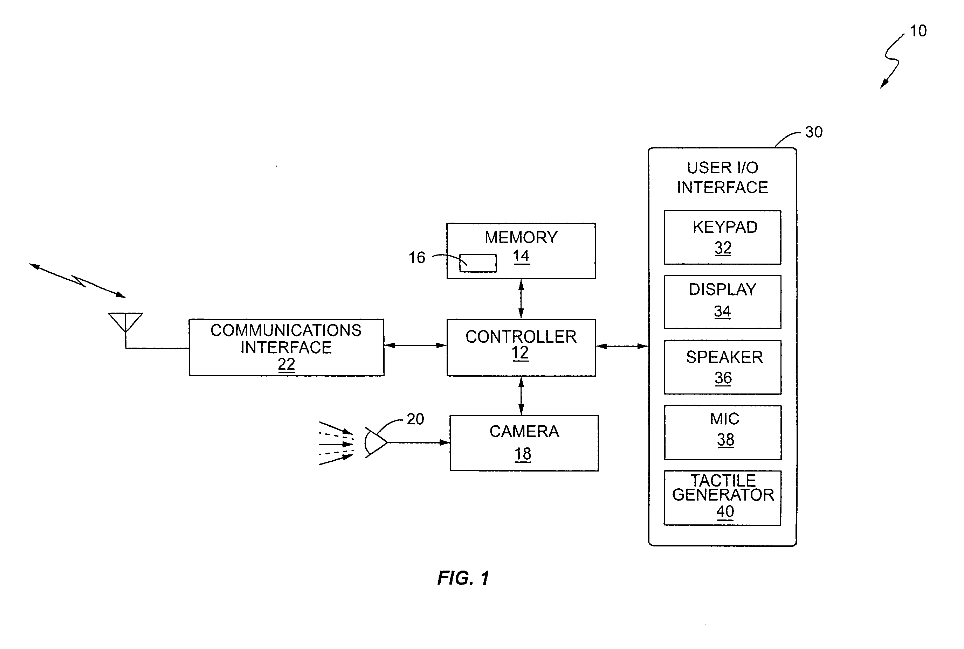

Turning now to the drawings, Figure 1 is a block diagram illustrating some of the components of an electronic device 10 configured according to one embodiment of the present invention. As seen in Figure 1, the electronic device 10 is illustrated as being a wireless communications device, and more specifically, a cellular telephone. However, this is for illustrative purposes only. As those of ordinary skill in the art will readily appreciate, the electronic device 10 shown in the figures and discussed throughout the specification may comprise any electronic device known in the art.

Device 10 comprises, *inter alia,* a programmable controller 12, a memory 14 for storing data and one or more applications programs 16, a high-speed camera 18 connected to a lens 20, a communications interface 22, and a User Interface (UI) 30. To facilitate user interaction with the device 10, the UI 30 comprises a keypad 32, a display 34, a loudspeaker 36, a microphone 38, and a tactile feedback generator 40.

The controller 12 comprises one or more programmable microprocessors configured to control the user device 10 according to logic and instructions stored in memory 14. Such control includes the control of conventional functions, such as user I/O and communications functions, but also includes the control of the detecting and monitoring of the horizontal and vertical positions of an input member, such as the user's finger, for example, relative to the UI. Specifically, based on information provided by one or more sensors, the controller 12 detects the horizontal and vertical positions of the user's finger relative to the UI before the user makes contact with the UI. The controller 12 then generates first and second feedback signals to indicate those positions to the user. As described in more detail later, the controller 12 may also vary one or both of the feedback signals to correspond with the changing horizontal and/or vertical positions of the user's finger relative to the UI.

Memory 14 is a computer readable medium representing the entire hierarchy of memory in the user device 10. Memory 14 may comprise both random access memory (RAM) and read-only memory (ROM), and may be implemented, for example, as one or more discrete devices, stacked devices, or removable devices, such as a flash drive or memory stick, or may be integrated with controller 12. As previously stated, the computer program instructions (i.e., application 16) and data required for operating the user device 10 according to the present invention may be stored in non-volatile memory, such as EPROM, EEPROM, and/or flash memory. When executed by the controller 12, the logic and instructions of application 16 are capable of determining the horizontal and vertical positions of the user's finger relative to the UI 30 based on information obtained by camera 18. The logic and instructions of application 16 are also capable of causing the controller 12 to generate and vary first and second feedback signals to indicate those determined horizontal and vertical positions to the user.

The camera 18 utilizes a wide-angle lens 20, and may be any camera or other imaging circuitry known in the art. However, in one embodiment, camera 18 comprises a compact, high-frame-rate camera compatible with the IEEE 1394 family of digital camera specifications. One such suitable camera is the FIREFLY MV provided by POINT GREY RESEARCH. The FIREFLY MV is a compact, high-frame-rate camera with a lens that has a 1.9mm focal length and a frame rate of about 144 frames per second (fps); however, those skilled in the art should realize that other focal lengths and/or frame rates are also suitable.

The camera 18 may include image processing circuitry. In operation, the camera 18 functions as a sensor and captures a series of images of the user's fingertip whenever the user places a finger proximate the UI 30 to select an input control. The captured images are then passed to the image processing circuitry for processing. Particularly, the image processing circuitry obtains a binarized image of the user's fingertip. Using this image as a template, the image processing circuitry employs well-known positioning techniques to track the fingertip as the user moves the finger around the UI 30, and estimates a 3-dimensional position of the user's fingertip relative to the UI 30. For example, as is known in the art, the scale of the fingertip in the captured images is inversely proportional to the distance between the fingertip and the camera. Therefore, knowing the distance between the camera lens and the fingertip, and knowing that the user's finger is proximate the display, the image processing circuitry is able to estimate the horizontal and vertical positions of the fingertip relative to the UI 30, and report those positions to the controller 12.

In addition to the foregoing method, there are other vision-based methods for determining the horizontal and vertical positions of the user's finger that are equally as suitable. For example, in one embodiment, the device 10 incorporates multiple built-in high-frame-rate cameras 18 disposed around the UI 30. The cameras 18 capture images of the user's fingertip prior to the user contacting the UI 30 as the user moves the finger relative to the UI 30. In most cases, the user inadvertently causes the device 10 to move. Therefore, using well-known image processing techniques and algorithms, the image processing circuitry estimates that "background" motion (i.e., the motion of the device 10 caused by the inadvertent movement the user's hand) and uses that estimation to extract the information associated with the user's fingertip from the captured images. In another embodiment, the cameras 18 capture images of the user's finger as it moves around the UI 30. The image processing circuitry monitors the user's moving finger, and determines the horizontal and vertical positions of the finger. In each case, the processing circuitry generates and sends signals, as is known in the art, to the controller 12 to identify the determined horizontal and vertical positions of the user's finger relative to the UI 30.

Each of these methods for detecting the positions of a user's finger relative to a user interface for a mobile device is well-known and described in a research article entitled "Camera-Based Motion Recognition for Mobile Interaction," ISRN Signal Processing, vol. 2011, Article ID 425621, 12 pages, 2011. doi:10.5402/2011/425621. That article, which is authored by Jari Hannuksela, Mark Barnard, Pekka Sangi, and Janne Heikkilä, is incorporated herein by reference in its entirety.

The communications interface 22 comprises any known wireless interface that permits the user of user device 10 to communicate and exchange data with one or more remote parties via a communications network (not shown). The communications interface 22 may comprise, for example, a cellular transceiver and/or a short-range transceiver. As is known in the art, the cellular transceiver could be a fully functional cellular radio transceiver that operates according to any known standard, including, but not limited to, Global System for Mobile Communications (GSM), TIA/EIA-136, cdmaOne, cdma2000, UMTS, Wideband CDMA, and 3GPP Long-Term Evolution (LTE). The short-range transceiver could be configured to transmit signals to, and receive signals from an access point (not shown) or another user device via a short-range interface. In one embodiment, the communications circuitry 22 comprises a BLUETOOTH transceiver or Wi-Fi transceiver operating according to the IEEE 802.xx family of standards.

The UI 30 generally includes one or more components that permit the user to interact with, and control the operation of, the user device 10. As seen in Figure 1, the UI 30 comprises a keypad 32, a display 34, which may be touch-sensitive, a speaker 36, a microphone 38, and, in some embodiments, a tactile feedback generator 40.

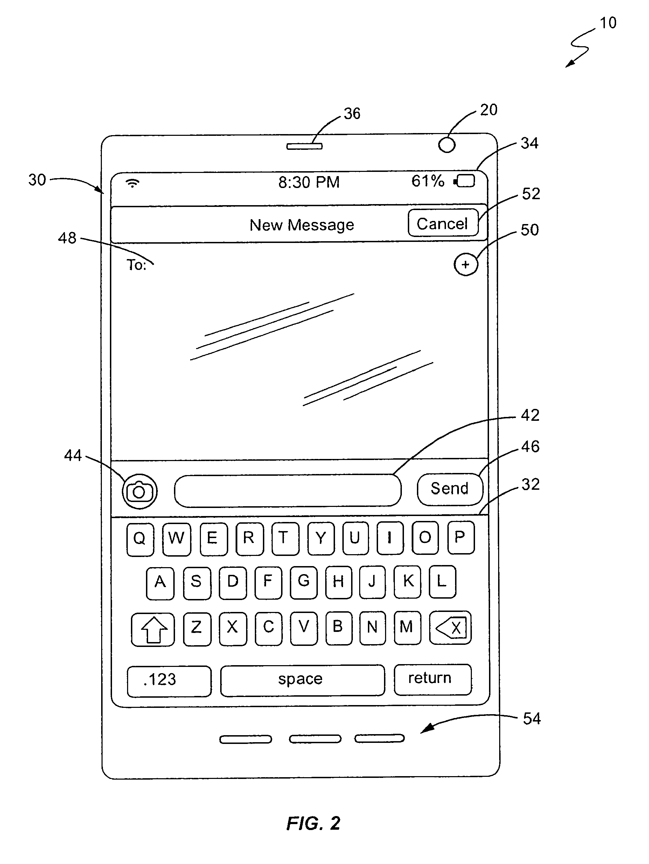

The keypad 32 is a set of alpha-numeric characters arranged generally in a row-column format (see Figure 2). The keypad usually includes keys corresponding to digits, letters, and symbols, but may include other controls as well. The display 34, in this embodiment, is a touch-sensitive display. Thus, one or more of the keys of the keypad appear on the touch-sensitive display 34 as a touch-sensitive control. To select a control, such as a key, for example, the user needs only to touch the desired control on the display 34 with his or her finger. The speaker 36, as known in the art, converts audio electrical signals into audible sounds so that they can be heard by the user. The microphone 38 performs the opposite function - specifically, microphone 38 converts audible sounds detected at the microphone 38 into electrical signals to be sent to a remote party.

The tactile feedback generator 40 is configured to produce vibration in device 10. Although any tactile feedback generator capable of producing varying levels of vibration may be utilized with the present invention, one suitable tactile feedback generator 40 is described in U.S. Pat. No. 7,064,655. The '655 patent is assigned to the assignee of the present invention, and is incorporated herein by reference in its entirety. Particularly, the tactile feedback generator 40 includes a motor that rotates an unbalanced load. As is known in the art, the amount of vibration produced is a function of the mass of the unbalanced load, the distance of the center of mass of the load from a rotational axis, and the speed at which it rotates. In some conventional devices, these parameters are often fixed by the manufacturer and cannot be changed. However, with the tactile feedback generator 40 of the present invention, these parameters need not be fixed. Rather, one or more of the parameters used to control the amount of vibration are variable. As is described in more detail below, varying these parameters allows the controller 12 to increase and decrease the amount of vibration that is perceived by the user.

Rotational tactile feedback generators are not the only type of tactile feedback generators suitable for use with the present invention. Another type of suitable tactile feedback generator is a linear tactile feedback generator. Linear tactile feedback generators, or "linear vibrators," may be especially well-suited for use with the present invention because of their fast response times.

As previously stated, the present invention generates multiple feedback signals to indicate the position of the user's fingertip relative to the UI 30. Figure 2 illustrates one such UI 30 as a graphical interface for a text messaging application. Using this application, users may, as is well-known in the art, send and receive text messages with one or more remote parties.

As seen in Figure 2, the UI 30 is displayed on a touch-sensitive display 34. The keypad 32 includes a plurality of keys, as well as some additional controls and fields that are user-selectable, and is arranged in a generally row-column format. Particularly, the lowermost "1^{st} row" of keys includes the touch-sensitive keys labeled ".?123," "space," and "return." The "2^{nd} row" of touch-sensitive keys includes a "shift key" (indicated by the upward facing arrow), followed by the letters "Z X C V B N M." The "3^{rd} row" of touch-sensitive keys includes the letters "A S D F G H J K L," while the "4^{th} row" of touch-sensitive keys includes the letters "Q W E R T Y U I O P." The "5^{th}" row includes a message field 42, into which the user enters text, an image control 44, which the user can use to add images to the text messages, and a "SEND" control key 46 that the user can employ to transmit a completed text message. Other selectable touch-sensitive controls include a "TO" field 48, in which the user enters the name or address of a remote party or device, a "+" control key 50 to facilitate the selection and addition of remote parties from a list, and a "CANCEL" control key 52 that the user can use to abort the message before sending the message. In addition, the device 10 may include one or more other controls, such as buttons 54 that are not part of the graphical interface on touch-sensitive display 34. The buttons 54 may, in one embodiment, be utilized by the user to perform one or more pre-determined functions. Those skilled in the art will appreciate that other keys and/or selectable controls are also possible.

Each of the keys and controls are generally arranged in "offset" columns. For example, the 'S and Z' keys are considered to be in a single column. Some keys, such as the 'Q' key or the '+' control key 50, are also in a single column. Other keys and fields, such as the "shift" key, the "space" key, the "return" key, and the message field 42, span several columns. According to the present invention, when the user's finger approaches the surface of the UI, the camera 18 detects the user's finger. Using the techniques described above, the camera 18 captures a series of images of the finger and determines the horizontal and vertical positions of the user's finger in relation to the UI 30. Based on those coordinates, the controller 12 generates first and second feedback signals to render to the user. The first and second feedback signals indicate the horizontal and vertical positions of the user's finger to the user so that the user can determine, prior to actually touching the key or control, that the finger is above or proximate the desired key or control.

In one embodiment, the first and second feedback signals comprise an audible sound, such as a tone, that is rendered to the user. As the tone is rendered through speaker 36, the controller 12 varies one or more parameters to vary the tone. The changes in the tone indicate to the user the estimated horizontal and vertical position of the finger above the surface of the UI 30.

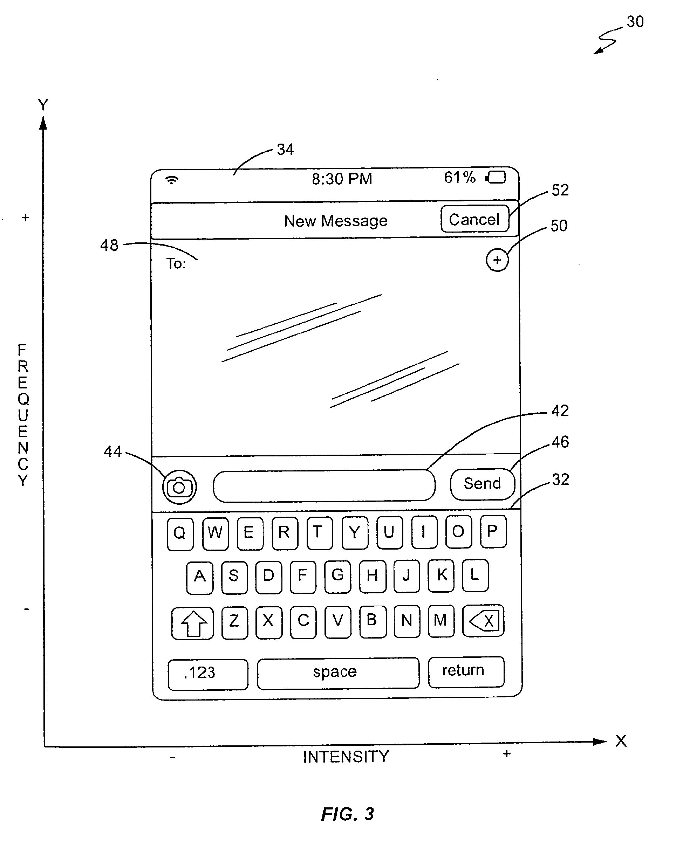

For example, Figure 3 illustrates the UI 30 as well as how the tone might change under the control of controller 12. Specifically, a vertical movement of the user's finger along the UI 30, without actually contacting the surface of the UI 30, could cause the controller 12 to increase or decrease the frequency of the tone being rendered. Thus, as perceived by the user, the tone indicating that the user's finger is detected to be over the "space" key would be lower than the tone rendered when the user's finger is detected to be over the "TO" field 48. Similarly, a horizontal movement of the user's finger along the UI 30, without actually contacting the surface of the UI 30, could cause the controller to increase or decrease the intensity of the tone. Thus, as perceived by the user, the volume of the tone emitted from speaker 36 when the user's finger is detected to be above the 'Z" key would be lower than if the user's finger were detected to be above the 'M' key. It should be noted that, in one embodiment of the present invention, the controller 12 is configured according to the application 16 to vary both the frequency and the intensity of the tone based on the detected vertical and horizontal positions of the user's finger relative to the UI 30.

Therefore, by varying the frequency and the intensity of a rendered tone as a function of the detected vertical and horizontal positions of the user's finger, respectively, the controller 12 can provide an indication of the position of the user's finger relative to the keys and controls on the UI 30 before the finger actually contacts the surface of the UI 30. However, such functionality is not constrained to the touch-sensitive keys, fields, and controls. Particularly, as was seen in Figure 2, the device 10 may include one or more buttons 54 that are integrated into the housing of device 10. Because the camera 18 uses a wide-angle lens 20, the user's finger can also be detected when it is over these buttons as well. In such cases, the user would perceive the frequency of the emitted tone to be lower than the frequency of the emitted tone when the user's finger is detected to be over the "space" key, for example. Likewise, as the user moved the finger over the buttons from left to right and back again, the volume of the tone would increase and decrease correspondingly.

The present invention is not limited to the rendering and control of an audible tone as first and second feedback. In another embodiment, the present invention controls the operation of the tactile feedback generator 40 to indicate the horizontal and vertical positions of the user's finger relative to the UI 30. In this embodiment, the controller 12 could vary the frequency of vibrations generated by the tactile feedback generator 40 to indicate the vertical position of the user's finger. By way of example, if the user's finger is detected to be over the "return" key, the controller might generate the control signals needed to cause the tactile feedback generator to provide a single, short burst of vibration. If the user's finger is detected to be over the "M" key in the second row, the controller might generate the control signals needed to cause the tactile feedback generator to provide two short bursts of vibration. Similarly, successively higher numbers of short bursts (e.g., three, four, five, etc.) of vibration could be rendered to indicate a vertical position over the 3^{rd}, 4^{th}, and 5^{th} rows of keys, respectively.

Horizontal movement of the user's finger would cause the intensity of the vibration to vary. For example, if the user's finger is detected to be over the "Q" key, the user would perceive a less intense or "softer" vibration than if the user's finger were detected over the "P" or "L" keys. Moreover, as above, the controller 12 could generate the control signals needed to control or vary both the frequency of vibration, as well as the intensity of vibration, generated by the tactile feedback generator 40 based on the detected position of the user's finger.

Thus, the present invention can use and control the device 10 to provide audible or tactile feedback indicating the position of the user's finger relative to the UI 30. However, in another embodiment, the controller 12 is configured to generate the requisite control signals to vary both an audible feedback signal and a tactile feedback signal in combination.

More specifically, the controller 12 could be configured to increase or decrease the frequency of one of the tone and the tactile feedback generator 40 based on the detected vertical movement or position of the user's finger. The controller 12 could also be configured to vary the intensity of the other of the tone and tactile feedback generator 40 responsive to the horizontal movement or position of the user's finger relative to the UI 30. Thus, in this embodiment, the present invention utilizes both audio and tactile feedback to indicate the horizontal and vertical positions of the user's finger relative to the UI 30.

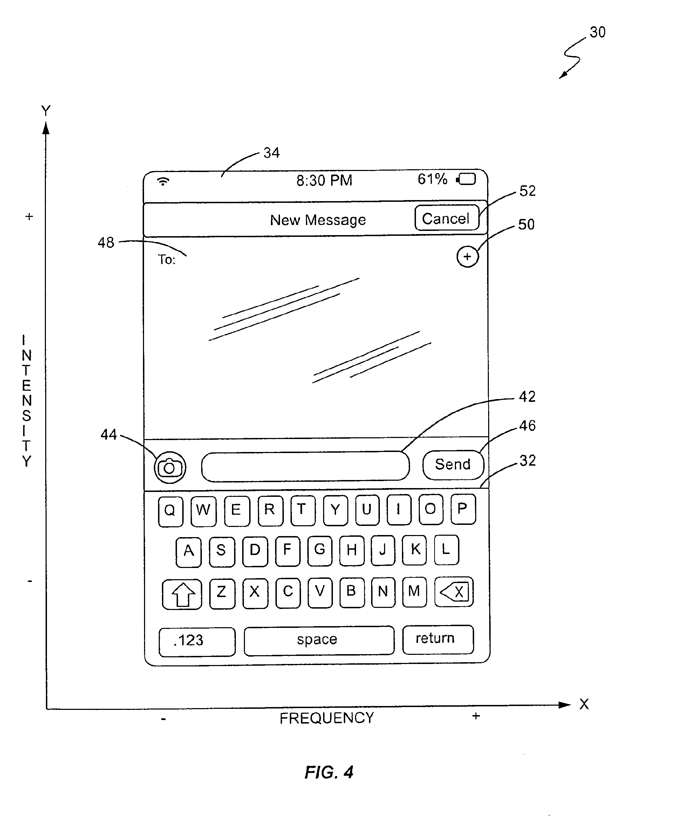

Figure 4 illustrates another embodiment of the present invention wherein the frequency of one of the tone and the tactile feedback generator 40 is controlled based on the horizontal position and movement of the user's finger relative to the UI 30. Similarly, the intensity of one of the tone and the tactile feedback generator is controlled to vary based on the vertical position and movement of the user's finger relative to the UI 30. Thus, according to one or more embodiments of the present invention, the controller 12 of the present invention is configured to vary the frequency and/or intensity of the audible tone, the tactile feedback generator, or both the tone and the tactile feedback generator as a function of the horizontal and/or vertical positions of the user's finger relative to the UI 30 before the user's finger contacts the surface of the UI 30.

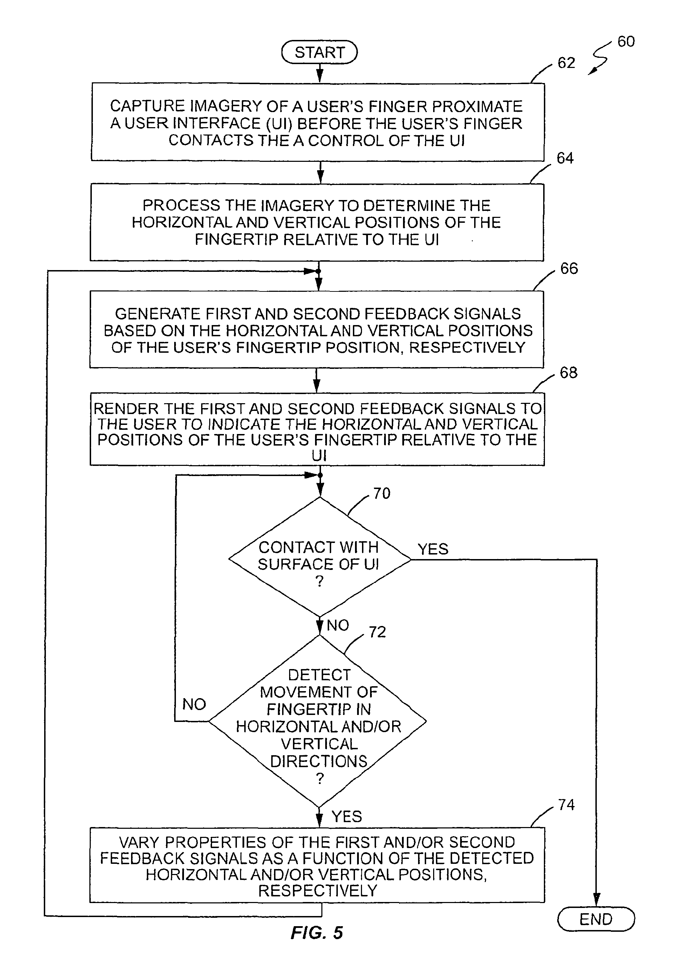

Figure 5 is a flow diagram illustrating a method 60 of indicating the horizontal and vertical positions of the user's finger according to one embodiment of the present invention. Method 60 begins when the camera 18 captures imagery (e.g., a series of images) of the user's finger proximate the UI 30 before the user's finger makes contact with a desired control or key on the UI 30 using one or more of the previously described methods (box 62). Once captured, the image processing circuitry processes the imagery to determine the horizontal and vertical positions of the user's finger relative to the UI 30 (box 64). The positions are reported to the controller 12, which then generates the first and second feedback signals based on the horizontal and vertical positions, respectively (box 66). The controller 12 then generates the control signals needed to cause the speaker 36 to render the tone and/or the tactile feedback generator 40 to generate the resultant vibrations (box 68).

The camera 18 and the controller 12 continue to monitor the position of the user's finger, even if the finger is moving, until the finger makes contact with the surface of the UI 30 (box 70). If contact is detected, method 60 ends. Otherwise, if no contact is detected, controller 12 determines whether the user is moving the finger vertically and/or horizontally proximate the UI 30 without touching the surface of the UI 30 (box 72). If no movement is detected, the controller 12 simply waits for user contact with the UI 30, or for movement of the user's finger to a new position (box 70). Otherwise, if movement of the user's finger is detected, the controller 12 varies one or more of the properties of the feedback signals being rendered with the movement. By way of example, the controller 12 could vary one or more parameters to cause the frequency of the tone to increase and decrease, and/or one or more other parameters to control the frequency and intensity of the vibrations generated by the tactile feedback generator 40.

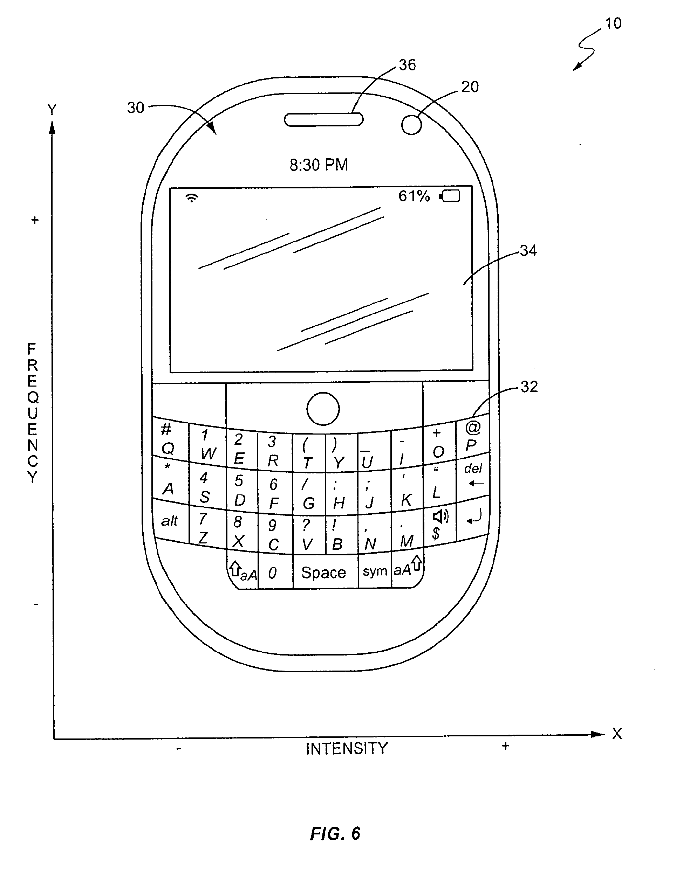

The present invention may, of course, be carried out in other ways than those specifically set forth herein without departing from essential characteristics of the invention. For example, as seen in the previous figures, device 10 is illustrated as having a UI 30 comprised mainly of a touch-sensitive interface. However, the present invention is not so limited. In another embodiment, seen in Figure 6, the keypad of UI 30 is disposed on a front housing of the device 10 and not on a touch-sensitive interface. Thus, the present invention is not limited to Smartphones or tablet computing devices, or to any electronic device having a touch-sensitive UI 30, but instead, may comprise other types of devices such as a BLACKBERRY, for example.

Further, the previous embodiments describe the feedback signals as varying based on the detected horizontal and vertical positioning of the user's finger. This includes cases where the feedback signals indicate when the user's finger is over a particular control or key, and when it is not. By way of example only, one embodiment of the present invention generates the first and second feedback signals to indicate whenever a user positions a finger over a control or key on UI 30, and ceases to generate those feedback signals when the user's finger is not over a control or key (e.g., "between" controls or keys on the UI 30). In other embodiments, the controller generates audible feedback to indicate the horizontal and vertical positioning of the user's finger relative to the UI 30, and tactile feedback to indicate when the user's finger is over a control or key.

Additionally, the previous embodiments were described as if the input member were the user's finger. While this is possible in one or more embodiments, the camera 18 and controller 12 can also detect other user input members, such as a stylus, and generate the first and second feedback signals based on the detected horizontal and vertical feedback positions of the stylus relative to the UI 30. Therefore, the present embodiments are to be considered in all respects as illustrative and not restrictive, and all changes coming within the meaning and equivalency range of the appended claims are intended to be embraced therein

## Claims

1. A method (60) for operating a user interface (30) on an electronic device (10), the method comprising:
detecting (62) a horizontal and vertical position of an input member relative to a User Interface (UI) (30) prior to the input member contacting a user control on the UI (30);
indicating (64) the horizontal position of the input member relative to the UI (30) by generating a first feedback signal based on the detected horizontal position of the input member; and
indicating (66) the vertical position of the input member relative to the UI (30) by generating a second feedback signal based on the detected vertical position of the input member.

2. The method (60) of claim 1 wherein at least one of the first and second feedback signals comprises audible feedback.

3. The method (60) of claim 1 or claim 2 wherein at least one of the first and second feedback signals comprises tactile feedback, and further comprising generating (68) the at least one first and second feedback signal as one or more bursts of tactile feedback based on the detected horizontal or vertical position of the input member.

4. The method (60) of any one of claims 1-3 wherein indicating the horizontal and vertical positions of the input member relative to the UI (30) comprises varying properties of the first and second feedback signals as a function of the detected horizontal and vertical positions, respectively.

5. The method (60) of claim 4 wherein varying properties of the first and second feedback signals comprises varying a frequency of one of the first and second feedback signals and the intensity of the other of the first and second feedback signals.

6. The method (60) of claim 4 or claim 5 wherein varying properties of the first and second feedback signals comprises varying a frequency of at least one of the first and second feedback signals.

7. The method (60) of any one of claims 4-6 wherein varying properties of the first and second feedback signals comprises varying an intensity of at least one of the first and second feedback signals.

8. An electronic device (10) comprising:
a User Interface (UI) (30);
a sensor (18) configured to generate positional signals upon detecting an input member proximate the UI (30) prior to the input member contacting a user control on the UI (30); and
a programmable controller (12) configured to:
calculate a horizontal and vertical position of the input member relative to the UI (30) based on the positional signals;
indicate the horizontal position of the input member relative to the UI (30) by generating a first feedback signal based on the detected horizontal position of the input member; and
indicate the vertical position of the input member relative to the UI (30) by generating a second feedback signal based on the detected vertical position of the input member.

9. The device (10) of claim 8 further comprising a loudspeaker (36), and wherein at least one of the first and second feedback signals comprises an audible sound rendered through the loudspeaker (36).

10. The device (10) of claim 8 or claim 9 further comprising a tactile feedback generator (40), and wherein at least one of the first and second feedback signals comprises tactile feedback generated by the tactile feedback generator (40).

11. The device (10) of claim 10 wherein the controller (12) is further configured to control the tactile feedback generator (40) to generate one or more bursts of tactile feedback based on the detected horizontal or vertical position of the input member.

12. The device (10) of any one of claim 8-11 wherein the programmable controller (12) is configured to indicate the horizontal and vertical positions of the input member relative to the UI (30) by varying properties of the first and second feedback signals as a function of the detected horizontal and vertical positions, respectively.

13. The device (10) of any one of claims 8-12 wherein the programmable controller (12) is configured to vary the properties of the first and second feedback signals by varying a frequency of one of the first and second feedback signals, and varying the intensity of the other of the first and second feedback signals.

14. The device (10) of any one of claims 8-13 wherein the programmable controller (12) is configured to vary the frequency of at least one of the first and second feedback signals.

15. The device (10) of any one of claims 8-14 wherein the programmable controller (12) is configured to vary the intensity of at least one of the first and second feedback signals.
